(19) Europäisches Patentamt
European Patent Office
Office européen des brevets

(11) **EP 1 357 006 B1**

(12) **FASCICULE DE BREVET EUROPEEN**

(45) Date de publication et mention
de la délivrance du brevet:
**05.04.2006 Bulletin 2006/14**

(51) Int Cl.:
***B60T 7/12*** *(2006.01)* ***B60T 8/24*** *(2006.01)*

(21) Numéro de dépôt: **03291004.4**

(22) Date de dépôt: **24.04.2003**

(54) **Procédé et dispositif équivalent d'optimisation à l'arret du serrage des freins d'un véhicule automobile**

Verfahren und Anordnung zum Optimieren der Betätigung der Feststellbremsen eines Fahrzeuges

Method and device for optimizing the parking braking of a vehicle

(84) Etats contractants désignés:
**BE DE FR GB**

(30) Priorité: **26.04.2002 FR 0205268**

(43) Date de publication de la demande:
**29.10.2003 Bulletin 2003/44**

(73) Titulaire: **Renault s.a.s.**
**92100 Boulogne Billancourt (FR)**

(72) Inventeur: **Vourc'h, Géraldine**
**78960 Voisins Le Bretonneux (FR)**

(74) Mandataire: **Davies, Owen Robert Treharne**
**RENAULT TECHNOCENTRE**
**Département Propriété Intellectuelle**
**Sce 00267 TCR GRA 2 36**
**1, avenue du Golf**
**78288 Guyancourt cedex (FR)**

(56) Documents cités:
**EP-A- 0 507 466** **FR-A- 2 713 573**

**Description**

La présente invention concerne les véhicules automobiles et le serrage des freins lors de l'arrêt de ces véhicules. Elle concerne plus particulièrement le serrage des freins lors de l'arrêt de véhicules dont le système de freinage est à commande découplée, c'est à dire le système électro-hydraulique ou le système entièrement électrique.

La publication EP0507466 décrit un tel dispositif de freinage, actionné par un fluide sous pression qui, lors d'une entrée du véhicule en phase d'arrêt, mémorise la pression du fluide de freinage qui a permis d'immobiliser le véhicule et maintient cette pression pendant toute la durée dudit arrêt. Le dispositif décrit dans cette publication ne permet pas une optimisation du serrage des freins à arrêt. En effet, on mémorise l'effort ou la pression de freinage qui a permis d'arrêter le véhicule, et l'on maintient ladite pression de freinage après arrêt. Or, il s'avère que la majorité des conducteurs continue à appliquer un effort de freinage important une fois le véhicule à arrêt, alors que ceci n'est pas nécessaire.

La publication FR2713573 s'attache à un dispositif de commande d'un frein de roue d'un véhicule automobile qui permet également de maintenir le véhicule immobile sur une voie en pente, sans intervention du conducteur. L'invention décrite dans cette publication propose de régler dans une pente, l'effort ou la pression de freinage appliqué par le frein à la roue en fonction de la pente de la voie. L'effort ou la pression de freinage appliqué par le conducteur pour immobiliser son véhicule dans une voie en pente peut être insuffisant à cause du poids du véhicule qui contribue à arrêter le véhicule dans une voie en pente. Grâce au dispositif proposé dans la publication, l'effort de freinage est suffisant pour empêcher tout recul du véhicule après arrêt de celui-ci sur une chaussée montante. Le dispositif décrit dans la publication FR2713573 ne permet pas d'optimiser l'effort appliqué. Ainsi, l'effort est uniquement prévu suffisamment important pour éviter tout recul du véhicule en fonction de la pente de la voie. De plus, le procédé de commande n'est appliqué que lorsque le véhicule est sur une voie en pente, le serrage des freins n'étant pas non plus optimisé lorsque le véhicule est sur du plat.

Cette optimisation de l'effort de serrage permet de limiter entre autres le phénomène de léchage entre les garnitures et les disques de frein, provoqué par le coincement du joint caoutchouc de l'étrier de frein. Ce joint de section carrée, serré sur le piston, se déforme lors du déplacement du piston suite à une consigne de freinage. Lorsque la pression chute, le joint en reprenant sa forme initiale, rappelle le piston. Si pour obtenir le freinage désiré, la course du piston est supérieure au jeu de déformation du joint, le piston coulisse sur le joint déformé. Le joint se coince alors entre le piston et la gorge dans laquelle il se situe. Pour des fortes pressions de freinage, le joint étant pincé, le piston ne peut plus coulisser pour revenir à sa position initiale. Les garnitures sont donc toujours en contact avec le disque même lorsque la phase de freinage est terminée. Ce phénomène est appelé léchage et engendre un couple résiduel en roulage, propre à augmenter la consommation du véhicule, l'usure des garnitures et des disques de frein et propre à créer des nuisances sonores. De plus, une optimisation de l'effort de serrage permet d'éviter une fatigue inutile des systèmes d'étrier de frein, un vidage et remplissage à l'arrêt du réservoir haute pression d'un système de freinage electro-hydraulique et de limiter la consommation d'énergie électrique pour appliquer l'effort de serrage nécessaire.

La présente invention se propose de résoudre ces problèmes en proposant un système permettant d'optimiser l'effort de serrage au juste nécessaire pour garder le véhicule immobile quelque soit la pente de la voie, la masse du véhicule ou tout autre paramètre influant sur l'effort de serrage des freins pour.obtenir l'arrêt du véhicule.

A cet effet, l'invention a pour objet un procédé d'optimisation de serrage des freins d'un véhicule à l'arrêt, comportant une étape initiale de consigne de freinage du conducteur et une étape d'application d'un freinage suffisant pour immobiliser le véhicule,
caractérisé en ce que l'étape d'application comporte une première étape pendant laquelle un effort de freinage, inférieur à l'effort de consigne et optimisé par rapport aux conditions extérieures, c'est à dire juste nécessaire en fonction par exemple de la pente de la route ou des conditions de dégradation des freins, est appliqué en cas d'arrêt du véhicule, et une deuxième étape pendant laquelle est assurée une augmentation de la valeur du serrage optimisé, en cas d'accélération du véhicule non désirée par le conducteur.

Ces accélérations non désirées témoignent en effet soit d'un choc dû à un autre véhicule, auquel cas la valeur du serrage optimisé correspond à un serrage maximal des freins, soit d'un glissement du véhicule dû à un serrage insuffisant des freins, auquel cas la valeur du serrage optimisé correspond à une augmentation par itération successive jusqu'à l'immobilisation du véhicule.

La valeur optimale du serrage des freins peut être obtenue lors de la première étape soit par itération successive décroissante de la valeur de freinage Fo jusqu'à la détection d'une accélération non voulue par le conducteur, soit par l'intermédiaire de moyens de calcul.

Dans le cas où un effort de freinage optimisé est obtenu par le calcul, la présence d'un asservissement en décélération permet de tenir compte d'une éventuelle dégradation des garnitures de frein ou d'une évolution de la masse du véhicule. En l'absence de cet asservissement, un calcul théorique est réalisé avec des conditions extérieures extrêmes, programmées dans le calculateur, représentatives du serrage optimal majoré d'une valeur apte à couvrir toutes les conditions possibles.

L'invention porte également sur un dispositif de serrage des freins d'un véhicule à l'arrêt selon le procédé d'optimisation, caractérisé en ce que le calculateur comprend des moyens de traitement des signaux d'entrée délivrés par au moins un capteur de position du moyen d'actionnement des freins, un capteur de pente, un capteur de vitesse des roues, et des moyens d'élaboration des signaux de commande des efforts de freinage appliqués par les freins.

Ce dispositif peut être complété par un asservissement en décélération ou un détecteur de choc, du type par exemple un accéléromètre, délivrant des signaux d'entrée disponibles pour le calculateur.

D'autres caractéristiques et avantages de l'invention apparaîtront à la lecture de la description détaillée qui suit pour la compréhension de laquelle on se reportera aux dessins annexés dans lesquels :

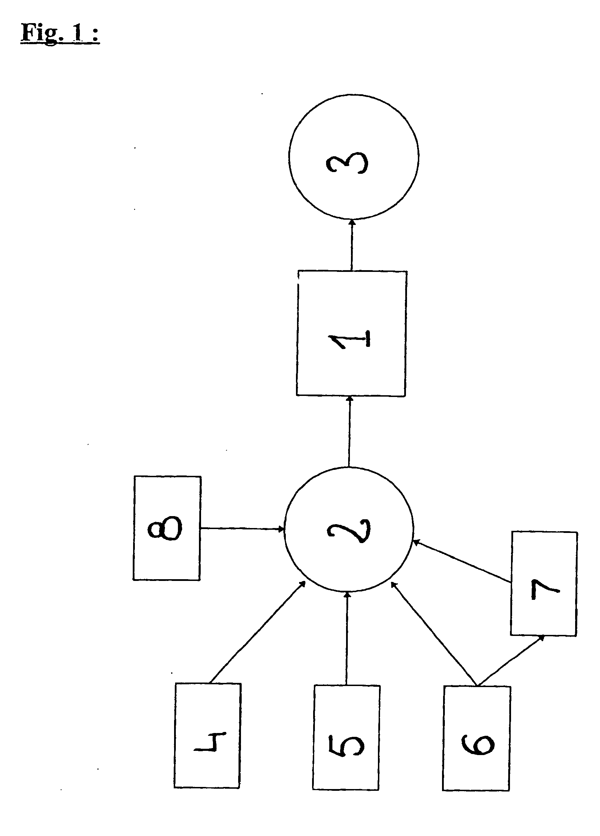

- la figure 1 est un schéma bloc représentatif du dispositif de serrage selon l'invention.
- la figure 2 est un diagramme représentatif d'un procédé de serrage des freins d'un véhicule à l'arrêt selon un premier mode de réalisation.
- la figure 3 est un diagramme représentatif d'un procédé de serrage des freins d'un véhicule à l'arrêt selon un deuxième mode de réalisation.
- la figure 4 est un diagramme représentatif d'un procédé de serrage des freins d'un véhicule à l'arrêt selon un troisième mode de réalisation.

Des freins à disque sont associés respectivement aux roues. La pression de fluide ou l'effort de serrage fourni à chaque frein est commandé par un calculateur 1 comprenant des moyens de traitement des signaux d'entrée 2 et d'élaboration des signaux de commande 3 des efforts de freinage appliqués par les freins.

Les signaux d'entrée 2 sont délivrés par un capteur de position 4 de la pédale de frein, des capteurs de vitesse 6 des roues et d'un capteur de pente 5 pour connaître l'inclinaison de la pente de la chaussée.

Le conducteur qui souhaite immobiliser son véhicule, exerce un effort de freinage d'une valeur F0. A partir de capteur de vitesses 6 des roues (capteurs du système ABS par exemple), le calculateur 1 détecte l'arrêt 32 du véhicule et déclenche la procédure d'optimisation du serrage des plaquettes de frein.

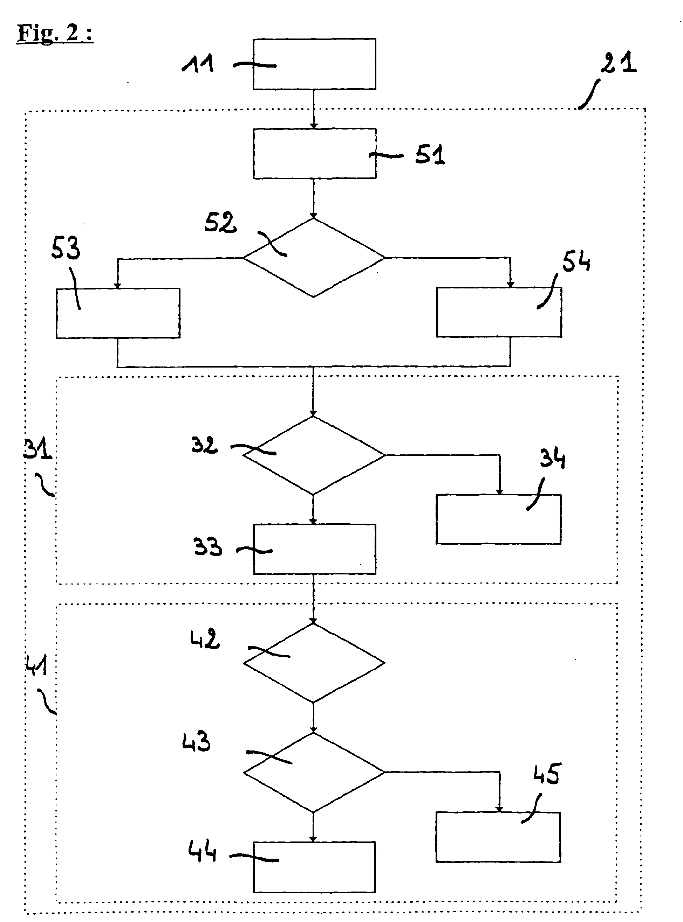

Dans un premier mode de réalisation, représenté à la figure 2, la valeur de serrage optimisée est obtenue par calcul, préalablement à l'arrêt du véhicule. Ce mode de réalisation est adapté pour un système de freinage équipé d'un asservissement en décélération 7. Celui-ci est un moyen de connaître si des paramètres intervenant dans le calcul théorique de l'effort de freinage ont varié lors de la phase de freinage précédant l'arrêt du véhicule. L'asservissement en décélération 7 garantit au conducteur l'obtention d'une réponse identique pour une même sollicitation de la pédale de frein, quel que soit l'état du système. Avec un tel système, pour une même position de la pédale de frein ou pour le même effort appliqué sur la pédale de frein correspond toujours la même décélération du véhicule. Par exemple, lorsque la masse du véhicule augmente, l'asservissement détecte que la décélération du véhicule ne correspond pas à la sollicitation donnée par le conducteur et que la décélération réelle du véhicule est inférieure à la décélération demandée par le conducteur à travers sa pédale de frein. L'asservissement en décélération 7 engendre alors une augmentation de la pression ou de l'effort aux freins jusqu'à ce que la réponse en décélération du véhicule soit égale à la décélération exigée par le conducteur. C'est le cas également dès que l'efficacité des garnitures est dégradée. Lorsque les plaquettes sont fortement sollicitées et chauffent au delà d'une certaine température, le coefficient de friction des plaquettes diminue et l'efficacité de freinage est dégradée. L'asservissement en décélération 7 engendre une augmentation de la pression ou de l'effort aux freins pour compenser la dégradation d'efficacité des garnitures.

Lors d'un freinage, avant la phase d'arrêt du véhicule, le calculateur 1 peut donc savoir grâce à l'asservissement en décélération 7, si la masse et/ou le coefficient de friction des plaquettes a varié. En effet, lorsque le conducteur, lors d'un freinage, appuie sur la pédale de frein de son véhicule, une course de la pédale correspond à une décélération du véhicule donnée par la loi de commande de la pédale de frein. A cet instant 11, l'assevissement en décélération 7 est activé et, à partir des informations données par les quatre capteurs de vitesses 6 de roues, en déduit, lors d'une première opération de calcul 51, la décélération réelle du véhicule. Celle-ci est incorporée dans une première opération de test 52, et si elle est inférieure à la décélération de consigne donnée par le conducteur, de la pression ou de l'intensité est rajoutée aux freins jusqu'à obtenir une décélération réelle du véhicule égale à la décélération de consigne.

Le calculateur 1 en déduit la variation du coefficient de friction/masse du véhicule. Il récupère en parallèle la valeur donnée par le capteur de pente 5 pour connaître la pente de la voie sur laquelle se situe le véhicule. A partir de ces données, une deuxième opération de calcul 53 renvoie l'effort de serrage ou la pression théorique optimisée à appliquer aux freins pour maintenir le véhicule immobile dans la voie.

$$FS_{théorique} = T_{roue} * R_{sc} / 2\mu * R_a$$

$FS_{theonque}$ : effort de serrage théorique

$T_{roue}$ : traînée à la roue

$R_{sc}$ : rayon sous charge du pneumatique

$R_a$ : rayon d'action du disque (rayon d'application de l'effort de frottement tangentiel sur le rotor)

$\mu$ : coefficient de friction des garnitures

La somme des traînées aux roues nécessaires pour maintenir le véhicule immobile doit être égale à la force due à la pesanteur qui s'applique sur le véhicule, soit :

$$\Sigma\, T = Mg\, \sin\alpha$$

M : masse du véhicule

$\alpha$ : pente de la voie sur laquelle se situe le véhicule

En prenant $T_{roue} = Mg\, \sin\alpha\, /\, 4$ , on obtient la formule suivante pour le calcul de l'effort de serrage théorique à appliquer à la roue :

$$Fs_{\text{théorique}} = Mg\, \sin\alpha * R_{sc}\, /\quad 8\mu * R_a$$

soit

$$Fs_{\text{théorique}} = cte * M\, \sin\alpha\, /\, \mu$$

Pour calculer la pression théorique à appliquer dans le cas d'un freinage électro-hydraulique, il suffit de diviser l'effort de serrage par la surface du piston de l'étrier :

$$Ps_{\text{théorique}} = Fs_{\text{théorique}}\, /\, (\pi d^2\, /\, 4)$$

Si l'asservissement en décélération n'a pas eu besoin de rajouter de pression ou d'effort aux freins lors de la phase de freinage précédent l'immobilisation du véhicule, alors l'effort ou la pression juste nécessaire à appliquer aux freins pour maintenir le véhicule immobile est renvoyé par une troisième opération de calcul 54, pour un véhicule en ordre de marche (à vide) et avec des plaquettes ayant pour valeur de coefficient de friction une valeur moyenne (0.4 par exemple). Ces valeurs sont initialement programmées dans le calculateur 1. Celui-ci enregistre également la valeur de la pente grâce à un capteur de pente 5. Cette valeur permet de calculer l'effort de serrage à rajouter pour vaincre la force due à la pente qui s'exerce sur le véhicule.

Par contre, dès qu'un paramètre varie, le calculateur 1 mémorise la pression ou l'effort de serrage rajouté aux freins lors de la phase de freinage par l'asservissement en décélération 7. Il en déduit la variation du rapport coefficient de friction masse du véhicule. L'unité centrale injecte cette valeur dans le calcul de l'effort de serrage théorique.

$$Fs_{\text{théorique}} = cte * \sin\alpha * \Delta\, (\, M\, /\, \mu\, )$$

Cette opération est effectuée à chaque phase de freinage juste avant l'arrêt complet du véhicule, afin d'obtenir à chaque arrêt complet la valeur optimisée de serrage des freins. L'étape d'application 21 d'un freinage suffisant pour immobiliser le véhicule à l'arrêt initie dans une première phase 31 un test 32 pour savoir si la vitesse du véhicule est devenue nulle. Dans le cas d'un véhicule toujours en mouvement, l'effort de freinage est appliqué en fonction de la consigne donnée par le conducteur sur les moyens d'actionnement des freins. Dès que la vitesse du véhicule est nulle, la consigne de serrage théorique calculée préalablement est appliquée aux freins. Le conducteur ayant initialement généré un effort Fo supérieur à l'effort optimisé $FS_{\text{théorique}}$ les freins sont desserrés progressivement dans le temps jusqu'à la valeur de l'effort théorique obtenu par le calculateur 1.

Une deuxième phase 41 débute par un test 42, afin de savoir si le véhicule se déplace. Dans l'affirmative, un test complémentaire 43 est initié afin de connaître la nature de cet avancement. Une valeur seuil permet d'assimiler toute valeur supérieure à un choc perpétré par un second véhicule, en mouvement, et toute valeur inférieure à un glissement du véhicule dû à un serrage des freins trop faible. En cas de choc, un détecteur de choc de type accéléromètre 8 informe le calculateur 1, qui déclenche aussitôt un serrage maximum des plaquettes de frein. En cas de glissement du véhicule, le calculateur 1 accentue l'effort de freinage par itération successive jusqu'à l'immobilisation du véhicule. Ainsi par itérations successives, l'effort de freinage optimum pour immobiliser un véhicule à l'arrêt est défini et sans cesse remis à jour. Les corrections appliquées par le calculateur 1 pour compenser les dégradations d'efficacité ou les variations dues à la masse par exemple sont mémorisées. A chaque redémarrage du moteur, une initialisation des paramètres est effectuée par le calculateur 1.

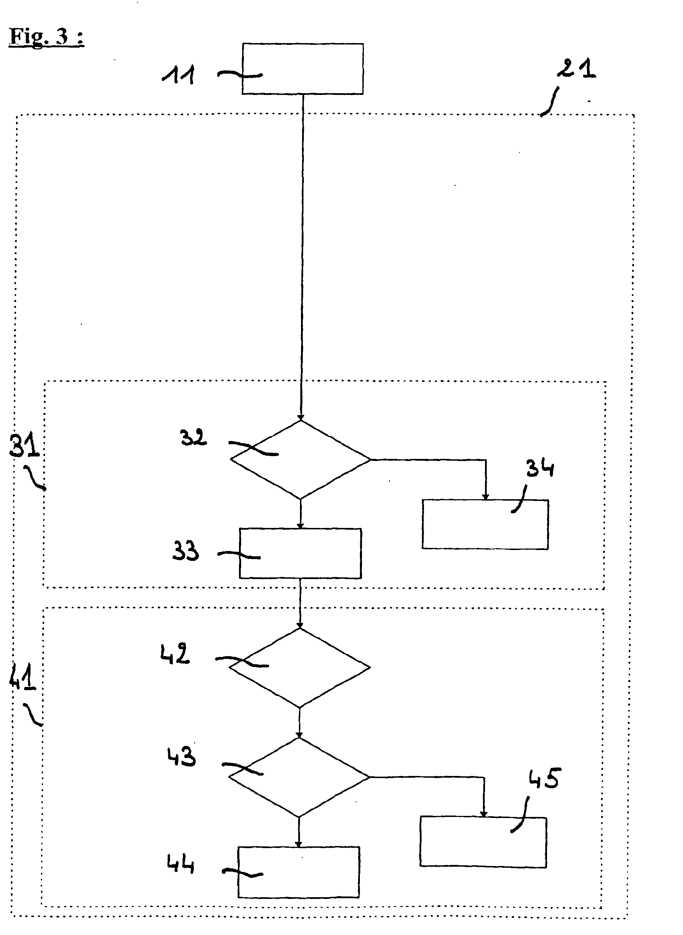

Selon un deuxième mode de réalisation de l'invention, représenté à la figure 3, l'effort de serrage optimum est obtenu par itération successive 33, sans l'apport d'information d'un système d'asservissement en décélération 7. Le conducteur qui souhaite immobiliser son véhicule, exerce 11 un effort de freinage d'une valeur Fo. Quand le calculateur 1 détecte, lors d'une opération de test 32, l'arrêt complet du véhicule, il déclenche la procédure de desserrage des plaquettes par itération successive 33, l'effort de freinage décroissant alors progressivement depuis la valeur de l'effort initial Fo. Dès que le calculateur 1 enregistre, via le capteur de vitesse 6 des roues, un léger mouvement du véhicule, il applique l'effort de serrage calculé à l'itération précédente juste avant le mouvement du véhicule. Si le véhicule continue à glisser légèrement, il enclenche la procédure inverse 44, c'est à dire une procédure de serrage des plaquettes par itération successive, jusqu'à immobilisation du véhicule.

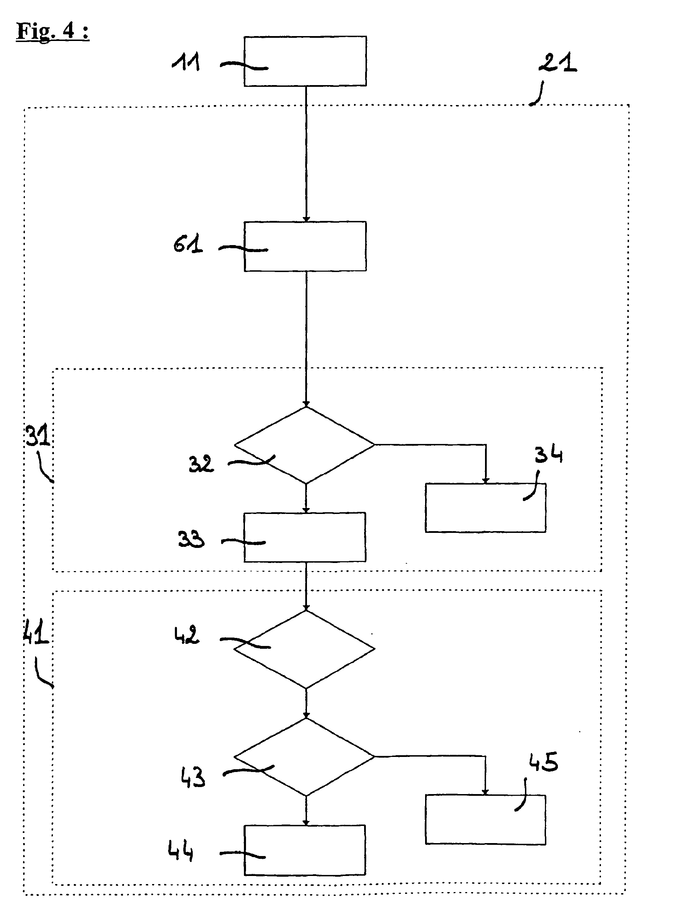

Selon un troisième mode de réalisation de l'invention, représenté à la figure 4, l'effort de serrage optimum est majoré, lors d'une opération de calcul 61, d'une valeur apte à couvrir toutes les conditions possibles. Ainsi, lorsque le calculateur 1 détecte l'arrêt 32 du véhicule, une opération 33 applique l'effort de serrage calculé pour le véhicule dans des conditions défavorables : à pleine charge, pour une pente maximum (par exemple de 30%) et pour un coefficient de friction des garnitures dégradé (égal à 0.25 par exemple). Le serrage des plaquettes n'est alors pas optimum, mais est adéquat pour remplir les conditions que sont l'absence de léchage des garnitures dans les kilomètres qui suivent le redémarrage et la diminution de la consommation d'énergie.

L'invention n'est nullement limitée aux modes de réalisation décrits et illustrés qui n'ont été donnés qu'à titre d'exemple.

**Revendications**

1.    Procédé d'optimisation de serrage des freins d'un véhicule à l'arrêt, comportant une étape initiale (11) de consigne de freinage du conducteur et une étape d'application (21) d'un freinage suffisant pour immobiliser le véhicule, **caractérisé en ce que** l'étape d'application (21) comporte :

   une première phase (31) pendant laquelle un effort de freinage (33), inférieur à l'effort de consigne et optimisé par rapport aux conditions extérieures, est appliqué en cas (32) d'arrêt du véhicule,
   une deuxième phase (41) pendant laquelle est assurée une augmentation de la valeur du serrage optimisé, en cas (42) d'accélération du véhicule non désirée par le conducteur.

2.    Procédé d'optimisation de serrage selon la revendication 1, **caractérisé en ce que** l'augmentation, lors de la deuxième phase (41), de la valeur du serrage optimisé correspond à un serrage maximal (44) des freins si l'accélération du véhicule est supérieure à un seuil prédéterminé auquel cette accélération est comparée lors d'une opération préalable de test (43).

3.    Procédé d'optimisation de serrage selon la revendication 1, **caractérisé en ce que** l'augmentation, lors de la deuxième phase.(41), de la valeur du serrage optimisé correspond à une augmentation par itération successive (45) jusqu'à l'immobilisation du véhicule si l'accélération du véhicule est inférieure à un seuil prédéterminé auquel cette accélération est comparée lors d'une opération préalable de test (43).

4.    Procédé d'optimisation de serrage selon la revendication 1, 2 ou 3, **caractérisé en ce que** lors de la première phase (31), l'effort de freinage optimisé est obtenu par itération successive décroissante (33) de la valeur de freinage (Fo) jusqu'à la détection par une opération de test (42) d'une accélération non voulue par le conducteur.

5.    Procédé d'optimisation de serrage selon la revendication 1, 2 ou 3, **caractérisé en ce que** lors de l'étape d'application (21), l'effort de freinage optimisé est obtenu, préalablement à la première phase (31), par l'intermédiaire de moyens de calcul (1).

**6.** Procédé d'optimisation de serrage selon la revendication 5, **caractérisé en ce que** les moyens de calcul (1) utilisent des valeurs de conditions extérieures extrêmes (61).

**7.** Procédé d'optimisation de serrage selon la revendication 5, **caractérisé en ce que** la première phase (31) est précédée d'une estimation (51) de la décélération réelle et d'une comparaison (52) de cette décélération réelle du véhicule par rapport à la décélération de consigne, réalisée par un asservissement en décélération (7), cet asservissement en décélération (7) fournissant aux moyens de calcul (1) une estimation (53) de la variation de la masse du véhicule et du coefficient de friction des plaquettes de frein, dans le cas d'une décélération réelle inférieure à la décélération de consigne, les moyens de calcul utilisant dans le cas contraire (54) des valeurs représentatives des conditions initiales.

**8.** Dispositif de serrage des freins d'un véhicule à l'arrêt, pour la mise en oeuvre du procédé d'optimisation selon l'une quelconque des revendications 1 à 7, le dispositif comprennent un calculateur (1) qui comprend des moyens de traitement des signaux d'entrée (2) délivrés par au moins un capteur de position (4) du moyen d'actionnement des freins, un capteur de pente (5), un capteur de vitesse (6) des roues et des moyens d'élaboration des signaux de commande (3) des efforts de freinage appliqués par les freins, **caractérisé en ce que** le calculateur est adapté :

- pour renvoyer aux freins, pendant une première phase (31) et en cas (32) d'arrêt du véhicule, un effort de freinage (33) optimisé par rapport aux conditions extérieures et inférieur à l'effort de consigne, et
- pour augmenter, pendent une deuxième phase (41), la valeur du serrage optimisé en cas (42) d'accélération du véhicule non désirée par le conducteur.

**9.** Dispositif de serrage des freins selon la revendication précédente, **caractérisé en ce qu'**un asservissement en décélération (7) délivre des signaux d'entrée (2) disponibles pour le calculateur (1).

**10.** Dispositif de serrage des freins selon la revendication 8 ou 9, **caractérisé en ce qu'**un accéléromètre (8) délivre des signaux d'entrée (2) disponibles pour le calculateur (1).

**11.** Utilisation dans un procédé d'optimisation selon l'une quelconque des revendications 1 à 7 d'un dispositif de serrage des freins d'un véhicule, ledit dispositif ayant un calculateur (1) qui comprend des moyens de traitement des signaux d'entrée (2) délivrés par au moins un capteur de position (4) du moyen d'actionnement des freins, un capteur de pente (5), un capteur de vitesse (6) des roues, et des moyens d'élaboration des signaux de commande (3) des efforts de freinage appliqués par les freins.

**Patentansprüche**

**1.** Verfahren zum Optimieren des Anziehens der Bremsen eines stillstehenden Fahrzeugs, mit einem Anfangsschritt (11) einer Bremsanweisung des Fahrers und einem Anwendungsschritt (21) eines Bremsens, das ausreicht, um das Fahrzeug zu immobilisieren, **dadurch gekennzeichnet, dass** der Anwendungsschritt (21) Folgendes umfasst:

eine erste Phase (31), während welcher eine Bremskraft (33), die geringer als die angewiesene Kraft und gegenüber den äußeren Bedingungen optimiert ist, im Falle (32) eines Stillstandes des Fahrzeugs angelegt wird, eine zweite Phase (41), während welcher im Falle (42) einer vom Fahrer nicht erwünschten Beschleunigung des Fahrzeugs eine Erhöhung des optimierten Bremswertes sichergestellt wird.

**2.** Verfahren zum Optimieren des Anziehens nach Anspruch 1, **dadurch gekennzeichnet, dass** die Erhöhung, während der zweiten Phase (41), des optimierten Bremswerts einem maximalen Anziehen (44) der Bremsen entspricht, wenn die Beschleunigung des Fahrzeugs höher als eine vorbestimmte Schwelle ist, mit welcher die Beschleunigung während eines vorangehenden Testvorgangs (43) verglichen wird.

**3.** Verfahren zum Optimieren des Anziehens gemäß Anspruch 1, **dadurch gekennzeichnet, dass** die Erhöhung, während der zweiten Phase (41), des optimierten Bremswerts einer Erhöhung durch sukzessive Iteration (45) bis zum Stillstand des Fahrzeugs entspricht, wenn die Beschleunigung des Fahrzeugs geringer als eine vorbestimmte Schwelle ist, mit welcher diese Beschleunigung während eines vorangehenden Testvorgangs (43) verglichen wird.

**4.** Verfahren zum Optimieren des Anziehens gemäß Anspruch 1, 2 oder 3, **dadurch gekennzeichnet, dass** während der ersten Phase (31) die optimierte Bremskraft erzielt wird durch sukzessive abnehmende Iteration (33) des Bremswerts (Fo) bis zur Detektion durch einen Testvorgang (42) einer durch den Fahrer nicht erwünschten Beschleunigung.

**5.** Verfahren zum Optimieren des Anziehens gemäß Anspruch 1, 2 oder 3, **dadurch gekennzeichnet, dass** während des Anwendungsschritts (21) die optimierte Bremskraft vor der ersten Phase (31) mittels Berechnungsmitteln (1) erhalten wird.

**6.** Verfahren zum Optimieren des Anziehens gemäß Anspruch 5, **dadurch gekennzeichnet, dass** die Berechnungsmittel (1) Werte extremer Außenbedingungen verwenden (61).

**7.** Verfahren zum Optimieren des Anziehens gemäß Anspruch 5, **dadurch gekennzeichnet, dass** der ersten Phase (31) eine Schätzung (51) der wirklichen Abbremsung und ein Vergleich (53) dieser wirklichen Abbremsung des Fahrzeugs im Verhältnis zur angewiesenen Abbremsung vorangehen, die durch eine Abbremsregelung (7) ausgeführt werden, wobei diese Abbremsregelung (7) den Berechnungsmitteln (1) eine Schätzung (53) der Veränderung der Masse des Fahrzeugs und des Reibungskoeffizienten der Bremsbeläge in dem Fall liefert, in welchem die wirkliche Abbremsung geringer als die angewiesene Abbremsung ist, wobei die Berechnungsmittel im entgegengesetzten Fall (54) für die Außenbedingungen repräsentative Werte verwenden.

**8.** Vorrichtung zum Anziehen der Bremsen eines stillstehenden Fahrzeugs zur Durchführung des Optimierungsverfahrens gemäß einem der Ansprüche 1 bis 7, wobei die Vorrichtung einen Rechner (1) umfasst, der Mittel zur Verarbeitung der Eingangssignale (2) umfasst, die durch wenigstens einen Positionssensor (4) des Bremsenbetätigungsmittels, einen Steigungssensor (5), einen Geschwindigkeitssensor (6) der Räder ausgegeben werden und Mittel zur Erstellung der Bremssignale (3) der von den Bremsen angewandten Bremskräfte, **dadurch gekennzeichnet, dass** der Rechner dazu geeignet ist:

- die Bremsen während einer ersten Phase (31) und im Falle (32) des Stillstands des Fahrzeugs einer im Verhältnis zu den Außenbedingungen optimierte und zu der angewiesenen Kraft geringere Bremskraft (33) anzuweisen, und
- während einer zweiten Phase (51) den optimierten Bremswert im Falle (42) einer vom Fahrer nicht erwünschten Beschleunigung des Fahrzeugs zu erhöhen.

**9.** Vorrichtung zum Anziehen der Bremsen gemäß dem vorhergehenden Anspruch, **dadurch gekennzeichnet, dass** eine Abbremsregelung (7) dem Rechner (1) zur Verfügung stehende Eingangssignale (2) abgibt.

**10.** Vorrichtung zum Anziehen der Bremsen gemäß Anspruch 8 oder 9, **dadurch gekennzeichnet, dass** ein Beschleunigungsmesser (8) in dem Rechner (1) zur Verfügung stehende Eingangssignale (2) ausgibt.

**11.** Verwendung in einem Optimierungsverfahren gemäß einem der Ansprüche 1 bis 7 einer Vorrichtung zum Anziehen der Bremsen eines Fahrzeugs, wobei die Vorrichtung einen Rechner (1) aufweist, der Mittel zur Verarbeitung der Eingangssignale (2) umfasst, die durch wenigstens einen Positionssensor (4) des Bremsenbetätigungsmittels, einen Steigungssensor (5), einen Geschwindigkeitssensor (6) der Räder ausgegeben werden, und Mittel zur Erstellung der Befehlssignale (3) der durch die Bremsen angewandten Bremskräfte.

**Claims**

**1.** A method of optimising the braking force applied by the brakes of a stationary vehicle, comprising an initial stage (11) in which the driver provides a braking reference and an application stage (21) for applying sufficient braking to immobilise the vehicle, **characterised in that** the application stage (21) comprises a first phase (31) during which a braking force (33) lower than the reference force and optimised with respect to the external conditions, is applied in the case (32) in which the vehicle is stopped, and a second phase (41) during which an increase in the optimised braking value is provided in the case (42) of an acceleration of the vehicle not initiated by the driver.

**2.** A braking optimisation method as claimed in claim 1, **characterised in that** the increase, during the second phase (41), of the optimised braking value takes the form of a maximum application (44) of the brakes if the vehicle acceleration is above a predetermined threshold with which this acceleration is compared during a prior test operation (43).

**3.** A braking optimisation method as claimed in claim 1, **characterised in that** the increase, during the second phase (41), of the optimised braking value takes the form of a successive iterative increase (45) until the vehicle is immobilised if the vehicle acceleration is below a predetermined threshold with which this acceleration is compared during a prior test operation (43).

4. A braking optimisation method as claimed in claim 1, 2 or 3, **characterised in that**, during the first phase (31), the optimised braking force is obtained by a successive iterative decrease (33) of the braking value (Fo) until an acceleration not initiated by the driver is detected by a test operation (42).

5. A braking optimisation method as claimed in claim 1, 2 or 3, **characterised in that**, during the application stage (21), the optimised braking force is obtained, prior to the first phase (31), by calculation means (1)

6. A braking optimisation method as claimed in claim 5, **characterised in that** the calculation means (1) use extreme external condition values (61).

7. A braking optimisation method as claimed in claim 5, **characterised in that** the first phase (31) is preceded by an estimate (51) of the real deceleration and a comparison (52) of this real deceleration of the vehicle with respect to the reference deceleration, performed by a deceleration servo-control (7), this deceleration servo-control (7) supplying the calculation means (1) with an estimate (53) of the variation of the vehicle mass and the coefficient of friction of the brake pads, in the case of a real deceleration lower than the reference deceleration, the calculation means using, in the opposite case (54), values representative of the initial conditions.

8. A device for applying the brakes of a stationary vehicle, adapted to apply the optimisation method as claimed in any one of claims 1 to 7, the device comprising a computer (1) which comprises means for processing input signals (2) supplied by at least one sensor (4) of the position of the brake actuation means, a gradient sensor (5), a wheel speed sensor (6) and means for processing control signals (3) for the braking forces applied by the brakes, **characterised in that** the computer is adapted:

   - to supply the brakes, during a first phase (31) in the case (32) that the vehicle is stopped, with a braking force (33) optimised with respect to the external conditions and lower than the reference force, and
   - to increase, during a second phase (41), the optimised braking value in the case (42) of an acceleration of the vehicle not initiated by the driver.

9. A device for applying brakes as claimed in the preceding claim, **characterised in that** a deceleration servo-control (7) supplies the input signals (2) available to the computer (1).

10. A device for applying brakes as claimed in claim 8 or 9, **characterised in that** an accelerometer (8) supplies the input signals (2) available to the computer (1).

11. The use in an optimisation method as claimed in any one of claims 1 to 7 of a device for applying the brakes of a vehicle, the device comprising a computer (1) which comprises means for processing the input signals (2) supplied by at least one sensor (4) of the position of the brake actuation means, a gradient sensor (5), a wheel speed sensor (6) and means for processing control signals (3) for controlling the braking forces applied by the brakes.

**Fig. 1 :**

**Fig. 2 :**

Fig. 3 :

**Fig. 4 :**